# EUROPÄISCHE PATENTSCHRIFT

(11) **EP 0 555 543 B1**
(45) Veröffentlichungstag und Bekanntmachung des Hinweises auf die Patenterteilung: **20.09.1995**
(21) Anmeldenummer: 92121130.6
(22) Anmeldetag: 11.12.1992
(51) Int. Cl.: G01N 1/34, F16T 1/12, G01N 1/22, G01N 33/00

(54) **Kondensatabscheider**
Condensate separator
Dispositif de séparation de condensat

(30) Priorität: 12.02.1992 DE 4204016
(43) Veröffentlichungstag der Anmeldung: 18.08.1993
(73) Patentinhaber: rbr-Computertechnik GmbH, 58640 Iserlohn (DE)
(72) Erfinder: Reckermann, Michael, W-5860 Iserlohn (DE)
(74) Vertreter: Dörner, Lothar, Dipl.-Ing.

(56) Entgegenhaltungen:
- EP-A- 0 362 889
- DD-A- 128 437
- DE-A- 3 509 038
- DE-A- 3 718 423
- DE-U- 8 127 581
- US-A- 4 231 256
- US-A- 4 924 860
- DATABASE WPI Section PQ, Week 9125, 1991 Derwent Publications Ltd., London, GB; Class P13, AN 91087049 SMITH 'control valve unit' & WO-A-91 02455 (SMITH E. R.) 3. Juli 1991

## Beschreibung

Die Erfindung betrifft einen Kondensatabscheider, dem zu analysierendes Abgas zugeführt ist und der mit einem Gehäuse versehen ist, in dem ein Gaskühler und eine Überwachungseinrichtung angeordnet sind, die anspricht, wenn aus dem Abgas abgeschiedenes Kondensat einen wählbaren Füllstand in dem Gehäuse erreicht.

Bei der Messung von z. B. O₂ , CO, SO₂ und NOₓ im Abgas von Verbrennungsanlagen werden Meßgeräte mit elektrochemischen Sensoren verwendet (Abgasmeßgerät "ECOM-S" der Anmelderin, beschrieben und dargestellt in ihrem Prospekt-Faltblatt "ECOM ANALYSE-COMPUTER"). Um insbesondere bei Langzeitmessungen die Meßgeräte vor unnötigen Belastungen durch Kondensatabscheidungen an den Sensoren zu schützen, sind ihnen Kondensatabscheider - auch Kondensatfallen oder Wasserabscheider genannt - vorgeschaltet (Gasaufbereitungsgerät "ECOM-K" der Anmelderin, a.a.O.). Sie enthalten eine Kühleinheit, durch die das Abgas gefuhrt wird. Beim Kühlen des Abgases wird der größte Teil der in ihm enthaltenen Feuchtigkeit in Form von Kondensat abgeschieden. An den nachgeordneten Sensoren kann kein Kondensat mehr anfallen.

Bei dem bekannten Kondensatabscheider wird das Abgas einem Wärmetauscher zugeführt, der mit einem Kühlelement in Verbindung steht, im übrigen von einer Wärmedämmung umgeben ist. Das Kühlelement ist andererseits mit einem Rippen aufweisenden Kühlkörper verbunden. Die Geschwindigkeit der an den Rippen vorbeiströmenden Kühlluft wird durch einen Lüfter vergrößert. Eine eingebaute Überwachung signalisiert, wenn aus dem Kondensatabscheider das Kondensat entfernt werden muß. Der bekannte Kondensatabscheider ist Bestandteil eines Meßkoffers, der während des Messens keine Schräglage einnehmen darf, damit die Messung nicht verfälscht wird, und der aufwendig gestaltet ist.

Gleiches gilt für eine ohne Kühler arbeitende bekannte Einrichtung zur Abscheidung von Kondensaten und Verunreinigungen aus Meßgasen (DD 128 437). Bei dieser Einrichtung führt eine enge Gaseintrittsbohrung in einem zylindrischen Gehäuse seitlich rechtwinklig nach unten in einen ersten relativ stark erweiterten Raum. Der Raum ist nach unten verjüngt und mit rohrförmigem Ansatz ausgeführt, der über dem Boden eines Überlaufgefäßes endet. Über dem Raum sind nacheinander weitere Räume angeordnet, die durch schräge Bodenflächen voneinander getrennt sind. Die obere Begrenzung des letzten Raumes bildet eine Platte aus gepreßtem Filtermaterial, nach deren Durchdringen das Meßgas über einen Ausgang zur Meßanlage führt.

Gleiches gilt weiterhin für einen Kühler zur Meßgas-Aufbereitung für Betriebsanalysen (DE 81 27 581 U1), bei dem ein Kühlkörper mit inneren Kühlböden vorgesehen ist, die je eine Bohrung aufweisen. Der Kühlkörper ist auf der Seite des Meßgas-Eingangs über einen Flansch mit einer Meßgasentnahmesonde verbunden. Auf der gegenüberliegenden Seite trägt der Kühlkörper als Probenausgang eine Meßgasleitung. Umgeben ist der Kühlkörper von einem Außenmantel mit Kühlmitteleingang, Kühlmittelausgang sowie Thermometerstutzen.

Der Erfindung liegt die Aufgabe zugrunde, einen Kondensatabscheider so auszubilden, daß er lageneutral angebracht/eingesetzt werden kann und im übrigen vereinfacht aufgebaut ist. Bei einem Kondensatabscheider der eingangs genannten Art wird diese Aufgabe gemäß der Erfindung dadurch gelöst, daß in dem hohlzylindrisch ausgebildeten Gehäuse im Anschluß an eine Stirnseite, durch die das zu analysierende Abgas eintritt, ein das abgeschiedene Kondensat aufsaugender Kondensatsumpf, der proportional zur Sättigung mit Kondensat entgegen der Wirkung einer Druckfeder in Axialrichtung des Gehäuses bewegbar ist, und zwischen dem Kondensatsumpf und einem wählbaren Meßpunkt im Abstand von der Stirnseite die Überwachungseinrichtung vorgesehen sind.

Es ist zu bemerken, daß aus dem Dokument EP-A-0 362 889 schon bekannt ist, ein das abgeschiedene Kondensat aufsaugendes Material in einem Kondensatabscheider zu verwenden.

Der bei der Erfindung verwendete Kondensatsumpf besteht aus Zellulose-Fasern, die mit hohem Druck komprimiert sind. - Zellulose in dieser Form ist als Watte bekannt -. Der Kondensatsumpf macht in Zusammenwirken mit der Druckfeder den Kondensatabscheider lageunabhängig. Der Kondensatsumpf vergrößert nämlich sein Volumen entgegen der ursprünglichen Preßrichtung der Zellulosefasern und der Wirkung der Druckfeder unabhängig davon, in welcher Schräglage der Kondensatabscheider eingebaut ist. Erreicht der Kondensatsumpf durch Feuchtigkeitsaufnahme den in der Gehäusewand markierten, wählbaren Meßpunkt, erfolgt durch die Veränderung der elektrischen Leitfähigkeit des Kondensatsumpfs verglichen mit der Leitfähigkeit zwischen dem Kondensatsumpf und einer Gasstrecke ein Signal, daß der Kondensatsumpf getrocknet/das Kondensat entfernt werden muß. In der Praxis wird die Förderpumpe für das Abgas abgeschaltet. Der vorzugsweise an den Stirnseiten mit Anschlußtüllen für Zu- und Abfuhr des Abgases versehene Abgasabscheider ist ein handliches Gerät, das im Zustrom beliebiger Meßgeräte für die Messung der Abgase von Verbrennungsanlagen eingesetzt werden kann.

Ausgestaltungen und Weiterbildungen der Erfindung sind in den Unteransprüchen beschrieben. Ein Ausführungsbeispiel der Erfindung ist in der Zeichnung dargestellt und wird nachfolgend im einzelnen beschrieben. Es zeigen:
- Figur 1: in verkleinerter Darstellung einen Axialschnitt durch einen Kondensatabscheider;
- Figur 2: einen Kühlkörper für den Kondensatabscheider in Stirnansicht;
- Figur 3: einen anderen Kühlkörper für den Kondensatabscheider in Stirnansicht.

Der als Ausführungsbeispiel gewählte Kondensatabscheider weist ein zylindrisches Gehäuse 1 auf. Die Stirnseiten des Gehäuses 1 sind durch je einen Deckel 2,3 verschlossen. An jeden Deckel 2,3 ist eine Tülle angeformt, über die jeweils ein nicht dargestellter Schlauch für die Zufuhr des zu messenden Abgases und für seine Abfuhr bzw. Zufuhr zu dem ebenfalls nicht dargestellten Meßgerät aufgebracht ist.

Im Anschluß an den Deckel 2 ist in dem Gehäuse 1 ein Kondensatsumpf 4 vorgesehen. Der Kondensatsumpf 4 hat sein geringstes Volumen in trockenem Zustand, sein größtes Volumen, wenn er mit einem Kondensat gesättigt ist. Während des Sättigungsvorgangs bewegt sich der Kondensatsumpf 4 entgegen der Wirkung einer Druckfeder 5 von dem Deckel 2 weg. Die Druckfeder 5 liegt einerseits über eine Scheibe 6 an dem Kondensatsumpf 4 an, andererseits greift sie in einen zylindrischen Hohlraum, der auf der zugewandten Seite eines Kegels 7 vorgesehen ist. Die Druckfeder 5 ist als Schraubenfeder ausgebildet, die zwischen dem Kegel 7 und der Scheibe 6 um ein Röhrchen 8 gelegt ist. Das Röhrchen 8 steht einerseits mit der Tülle an dem Deckel 2 in Verbindung, durchsetzt den Kondensatsumpf 4 sowie den Freiraum zwischen dem Kondensatsumpf 4 und dem Kegel 7, und steht andererseits mit einer Axialbohrung in dem Kegel 7 weiter in Verbindung.

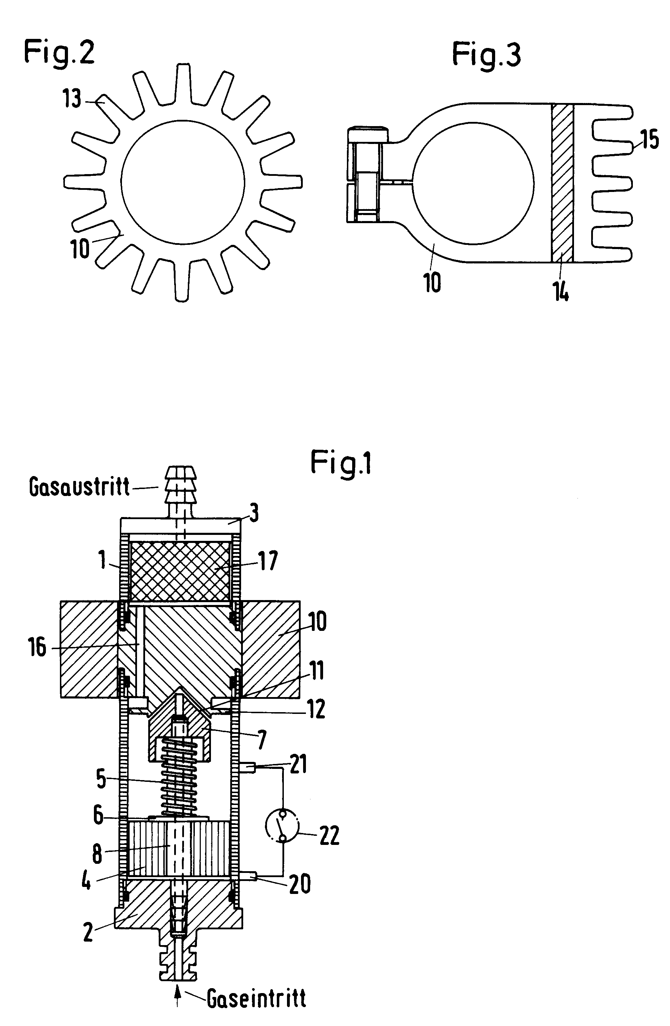

Durch einen schmalen Spalt von dem Kegel 7 getrennt ist ein Gaskühler 10 an dem Gehäuse 1 befestigt. Im Innern des Gehäuses 1 weist der Gaskühler 10 einen Negativ-Kegel 11 auf, der den Kegel 7 aufnimmt. Der Rand des Negativ-Kegels 11 ist flanschartig nach außen abgewinkelt und bildet zwischen dem Kegel 7 und der Wandung des Gehäuses 1 einen Schirm 12. Der die Wandung des Gehäuses 1 außen überragende Teil des Gaskühlers ist entweder mit Kühlrippen 13 - Figur 2 - oder mit einem Peltier-Element 14 verbunden, an das auf der dem Gehäuse 1 abgewandten Seite Kühlrippen 15 anschließen - Figur 3 -. Im Innern des Gehäuses 1 ist der Gaskühler 10 von einer Axialbohrung 16 durchsetzt. Zwischen dem Gaskühler 10 und dem Deckel 3 ist ein Ruß- und Staubfilter 17 angeordnet.

Über die Tülle im Deckel 2 und das Röhrchen 8 einströmendes, zu messendes Abgas strömt im Bereich des Negativ-Kegels 11 auf den Gaskühler 10. Durch die Abkühlung des Abgases wird Feuchtigkeit in der Form eines Kondensats ausgeschieden, welches sich an dem Schirm 12 sammelt und von dort entlang der Innenwand des Gehäuses 1 auf den Kondensatsumpf 4 gelangt oder auf ihn tropft. Je mehr Kondensat von dem Kondensatsumpf 4 aufgesaugt wird, um so weiter bewegt sich seine von dem Deckel 2 abgewandte Stirnfläche entgegen der Wirkung der Druckfeder 5 in Richtung des Gaskühlers 10.

Zwischen dem Gaskühler 10, vorzugsweise auf seiner dem Deckel 2 zugewandten Stirnseite, und einer wählbaren Stelle im Gehäuse 1 sind Meßelektroden 20, 21 vorgesehen. Die Meßelektroden 20,21 stehen mit einem Meßgerät 22 für die Kondensatüberwachung in Verbindung. Solange der Kondensatsumpf 4 noch nicht die Meßelektrode 21 erreicht hat, kann der Kondensatabscheider in Betrieb bleiben. Erreicht der Kondensatsumpf die Meßelektrode 21, ändert sich die elektrische Leitfähigkeit der Strecke zwischen den Meßelektroden 20,21. Es erfolgt ein Warnsignal, welches anzeigt, daß vor weiteren Einsatz des Kondensatabscheiders die Entleerung des Kondensats/Trocknung des Kondensatsumpfs 4 angezeigt ist, und es wird die Abgas-Zufuhr abgeschaltet.

Das von der Feuchtigkeit/dem Kondensat freie Abgas durchströmt die Axialbohrung 16 und gelangt an den Ruß- und Staubfilter 17. Dort werden die Ruß- und Staubteilchen aus dem Abgas entfernt. Erst dann gelangt das zu messende Abgas, für seine anschließende Analyse aufbereitet, über die Tülle an das nachgeordnete Meßgerät.

## Patentansprüche

1. Kondensatabscheider, dem zu analysierendes Abgas zugeführt ist und der mit einem Gehäuse (1) versehen ist, in dem ein Gaskühler (10) und eine Überwachungseinrichtung (22) angeordnet sind, die anspricht, wenn aus dem Abgas abgeschiedenes Kondensat einen wählbaren Füllstand in dem Gehäuse (1) erreicht, dadurch gekennzeichent, daß in dem hohlzylindrisch ausgebildeten Gehäuse (1) im Anschluß an eine Stirnseite, durch die das zu analysierende Abgas eintritt, ein das abgeschiedene Kondensat aufsaugender Kondensatsumpf (4), der proportional zur Sättigung mit Kondensat entgegen der Wirkung einer Druckfeder (5) in Axialrichtung des Gehäuses (1) bewegbar ist, und zwischen dem Kondensatsumpf (4) im Bereich der Stirnseite und einem wählbaren Meßpunkt (21) im Abstand von der Stirnseite die Überwachungseinrichtung (22) vorgesehen sind.

2. Kondensatabscheider nach Anspruch 1, dadurch gekennzeichnet, daß die Führung des Abgases in einer Tülle beginnt, die an einem die Stirnseite verschließenden Deckel (2) angeformt ist, in einem den Kondensatsumpf (4) konzentrisch durchsetzenden und von der Druckfeder (5) umgebenden Röhrchen (8) fortgesetzt ist, das in einem Kegel (7) mündet, der im Abstand von einem an dem Gaskühler (10) angeformten Negativ-Kegel (11) gehalten ist.

3. Kondensatabscheider nach Anspruch 2, dadurch gekennzeichnet, daß der Gaskühler (10) an seinem dem Kegel (7) zugewandten Rand schirmartig nach außen in Richtung der Wandung des Gehäuses (1) geführt ist.

4. Kondensatabscheider nach Anspruch 2 oder 3, dadurch gekennzeichnet, daß der Gaskühler (10) mit einem über das Gehäuse (1) vorstehenden Rippenkühlkörper (13) versehen ist.

5. Kondensatabscheider nach Anspruch 2 oder 3, dadurch gekennzeichnet, daß der Gaskühler (10) mit einem Peltier-Element (14) versehen ist, das andererseits mit einem über das Gehäuse (1) vorstehenden Rippenkühlkörper (15) versehen ist.

6. Kondensatabscheider nach einem der Ansprüche 2 bis 5, dadurch gekennzeichnet, daß der Gaskühler (10) mit einer Axialbohrung (16) versehen ist, durch die das von dem Kondensat befreite Abgas einem in einem Deckel (3) an der dem Eingangsdeckel (2) gegenüberliegenden Stirnseite angeordneten Gasaustritt zugeführt ist.

7. Kondensatabscheider nach Anspruch 6, dadurch gekennzeichnet, daß zwischen dem Gaskühler (10) und dem Gasaustritt ein Ruß- und Staubfilter (17) vorgesehen ist.

## Claims

1. Condensate separator to which the exhaust gas to be analysed is fed and which is provided with a housing (1) in which a gas cooler (10) and a monitoring device (22) are arranged that react when an adjustable level of condensate precipitated from the exhaust is reached in the housing (1), characterised by the fact that, connected to the end face of the hollow cylindrical housing (1) through which the exhaust to be analysed enters, is a condensate sump (4) that absorbs the precipitated condensate, said sump being movable axially in the housing (1) proportionally to the saturation with condensate and against the force of a compression spring (5), and in which the monitoring device (22) is arranged between the condensate sump (4) near the end face and a selectable metering point (21) at a distance from the end face.

2. Condensate separator as in Claim 1 in which the exhaust is first taken through a nozzle formed in the cover (2) that closes the front face, is then carried through a pipe (8), concentrically running through the condensate sump (4) and enclosed by the compression spring (5), said tube opening out to a cone (7) that is held at a distance from a concave cone (11) formed on the gas cooler (10).

3. Condensate separator as in Claim 2 in which the gas cooler (10) is taken along its edge facing the cone (7), in the form of a screen, outwards in the direction of the wall of the housing (1).

4. Condensate separator as in Claim 2 or 3 in which the gas cooler (10) is provided with a finned heat sink (13) projecting beyond the housing (1).

5. Condensate separator as in Claim 2 or 3 in which the gas cooler (10) is provided with a Peltier element (14), which in turn is provided with a finned heat sink (15) projecting beyond the housing (1).

6. Condensate separator as in one of the Claims 2 to 5 in which the gas cooler (10) is provided with an axial hole (16) through which the exhaust gas, from which the condensate has been removed, is conducted to an outlet arranged in a cover (3) in the face opposite the inlet cover (2).

7. Condensate separator as in Claim 6 in which a soot and dust filter (17) is arranged between the gas cooler (10) and the gas outlet.

## Revendications

1. Séparateur de condensat auquel sont amenés des gaz d'échappement à analyser et qui est équipé d'un boîtier (1) dans lequel sont disposés un radiateur de gaz (10) et un dispositif de surveillance (22) qui réagit quand le condensat séparé des gaz d'échappement atteint dans le boîtier (1) un niveau de remplissage sélectable, caractérisé en ce que dans le boîtier cylindrique et creux (1), à la suite d'une face frontale par laquelle le gaz d'échappement à analyser pénètre, sont prévus un réservoir (4) aspirant le condensat séparé et mobile (4) proportionnellement à la saturation du condensat en vainquant un ressort de compression (5) dans le sens axial du boîtier (1), et le dispositif de surveillance (22) entre le réservoir à condensat (4) au niveau du côté frontal et un point de mesure (21) sélectable, distant du côté frontal.

2. Séparateur de condensat selon la revendication 1, caractérisé en ce que le guidage du gaz d'échappement commence dans une gaine épousant la forme du couvercle (2) qui obture le côté frontal, se poursuit par une tubulure fine (8) traversant de manière concentrique le réservoir de condensat (4) et entourée par le ressort de compression (5), laquelle (8) se termine dans un cône (7) maintenu à distance par un cône négatif (11) épousant le radiateur de gaz (10).

3. Séparateur de condensat selon la revendication 2, caractérisé en ce que le bord du radiateur de gaz (10) tourné vers le cône (7) est dirigé vers l'extérieur sous forme de bouclier en direction de la paroi du carter (1).

4. Séparateur de condensat selon la revendication 2 ou 3, caractérisé en ce que le radiateur de gaz (10) est équipé d'un corps radiateur à nervures (13) saillant au-dessus du boîtier (1).

5. Séparateur de condensat selon la revendication 2 ou 3, caractérisé en ce que le radiateur de gaz (10) est équipé d'un élément Peltier (14) qui présente d'un autre côté un corps radiateur à nervures (15) saillant au-dessus du boîtier (1).

6. Séparateur de condensat selon l'une des revendications 2 à 5, caractérisé en ce que le radiateur à gaz (10) présente un alésage axial (16) par lequel le gaz d'échappement libéré de son condensat est amené à un orifice d'échappement disposé dans un couvercle (3) sur le côté frontal situé en face du couvercle d'entrée (2).

7. Séparateur de condensat selon revendication 6, caractérisé en ce qu'entre le radiateur à gaz (10) et la sortie du gaz est prévu un filtre à suie et à poussière (17).
